# EUROPEAN PATENT APPLICATION

(11) **EP 2 017 539 A1**
(43) Date of publication of application: **21.01.2009**
(21) Application number: 07109827.1
(22) Date of filing: 07.06.2007
(51) Int. Cl.: F24F 7/10, E04B 9/02

(54) **Ventilation system**

(71) Applicant: Nederlandse Organisatie voor Toegepast- Natuurwetenschappelijk Onderzoek TNO, 2628 VK Delft (NL)
(72) Inventor: Knoll, Bastiaan, 2671 DR Naaldwijk (NL); Jacobs, Peter, 2611 LK Delft (NL)
(74) Representative: van Loon, C.J.J.

(57) **Abstract**

Ventilation system for ventilating especially classrooms (1) and similar rooms, comprising a lowered ceiling (3) and means, e.g. a ventilator (5), for forced air inlet from the outside air (6) into the room (2) above the lowered ceiling, and air outlet openings (7) mainly evenly spaced over the whole surface of the lowered ceiling. The exhaust air may be led via an HR unit (12-16) to preheat the supply air. Blowing the supply air along the underside of the concrete upper floor (4) enables cooling that floor at night. By day this cold may be used to cool the supply air.

## Description

### Field of the invention

The invention refers to a ventilation system especially for classrooms and other dwelling, living and/or working spaces, hereinafter, for the sake of simplicity - however, not to be understood in any limiting sense - indicated as classrooms or rooms.

### Background of the invention

Air conditioning of classrooms etc. is a difficult problem, because large amounts of outside air have to be let in into the classroom without causing draught. In order to provide pupils and teacher with fresh air, per classroom 150 liters/second is required. In many cases only windows can be used for ventilation. Often this will not be sufficient for draught-proof ventilation. Based on investigations it is esteemed that in 80% of the elementary school classrooms the ventilation does not meet the minimal requirements of the relevant building regulations.

The CO₂ level, which legally is allowed to be 1200 ppm, often is a multiple of this value during some parts of the day. Recent investigations have shown that this also influences the school results. At arithmetic, for instance, it appears that even at small exceedings of the CO₂ level of 1200 ppm, the results are rewarded with a report mark 6 while it would have been a 7.5 when the CO₂ level would have been about 800 ppm.

A result of the high density of pupils in a classroom is also that much heat will be generated. Due to the high heat production in the classroom the heating system only needs to start at zero degrees at sunny days. Cold air via the windows or ventilation grids will not be mixed sufficiently because de heating only starts at very low temperature, which leads to comfort complaints deep in the classroom. Another problem is that overheating may occur in summer. Conventional solutions using active cooling and heat recuperation are costly in purchase and exploitation. The estimated costs for improving the inner climate in existing primary school classrooms in the Netherlands are about half a milliard of euros.

### Summary of the invention

The present invention aims to offer a solution for the problems indicated in the foregoing. To that end the invention preferably provides a method for ventilating especially classrooms and similar rooms, comprising next steps:
- providing a lowered ceiling;
- providing forced air inlet from the outside air into the room above the lowered ceiling;
- providing air outlet openings which are mainly evenly spaced over the whole surface of the lowered ceiling.

By the proposed method the whole ceiling surface is used to supply air to the classroom instead of blowing air concentratedly ("cold spots") via windows or grids in the façade or the ceiling. Via a pattern of air outlet openings in the (lowered) ceiling the air is blown into the room. By induction the air blown in will be mixed with the room air and thus the possible temperature difference will be equalized before the air comes into the living zone (height of about < 1.80 m).

According to the invention, the lowered ceiling is used as a distribution element having a maximum distribution surface which is incomparably much larger than the surface of the inflow opening(s) via which the outside air is let in (also much larger than when - according to the prior art - supplied via open windows or ceiling grids). Because the distribution surface is much larger, no draught will occur.

Due to the larger surface the outside air can better be mixed by induction with the inside air and thus preheating of the air will be unnecessary. By doing so overheating will be prevented. The system has a relative low flow resistance, which is favourable for the energy consumption. For the air distribution use may be made of existing components, which often are already present in classrooms, thus reducing the costs.

Using a perforated lowered ceiling for air supply is not obvious, because such a ceiling normally only is used for air exhaust.

Preferably, the section of the outlet openings will lie between 2 and 30 cm2 (e.g. circular openings having a diameter of 2.5 cm = about 5 cm²) and the pitch of the outlet openings between 1 and 50 cm (e.g. 30 cm). Preferably, the inflow speed lies between 1 and 4 m/s, depending on the remaining parameters, e.g. 2 m/s.

Preferably, the means for forced air inlet from the outside air into the room above the lowered ceiling are formed by an electrical ventilator.

During low outside temperatures the energy consumption for heating may be reduced by - optionally - providing a (more or less heat conducting) heat recovery (HR) plate between an air supply channel and an air exhaust channel, thus enabling the exhaust air to warm up the supply air. Because such an HR plate preferably extends over the whole or a substantial part of the surface of the classroom, a very large heat exchange surface will be available. By doing so the pressure drop of this HR construction and possible extra noise production caused by the ventilator can be minimized compared with prior art HR apparatus.

By means of a more or less isolating separation plate, indicated hereinafter as isolation plate, it can be achieved that the supply air can be blown via the underside of the (e.g. concrete) floor of the above storey (or the roof). A relatively high air speed will increase heat exchange with the concrete mass. By doing so it is possible to cool (during warm weather) this concrete floor at night. By day this cold can be used then to cool the supply air. In winter the isolation in this isolation plate, but certainly also the stationary air in the (small) room between the isolation plate and the ceiling, provides an isolating layer. By this it can be prevented that heat will be withdrawn from the ceiling, which possibly would lead to complaints (cold feet) at the higher floor.

The large surface is also advantageous for the standing time and pressure drop of a filter possibly provided. Due to this the energy consumption remains low and it is possible to achieve a long filter standing time. This offers the possibility to replace filters during "major repairs".

By means of, e.g., a distribution valve or slide it can be adjusted whether the supply air will be transferred to the outlet room via the first or via the second channel.

The method according to the invention has the advantage that the components which are required for the method have more or less the shape of a lowered ceiling, i.e. are shaped of plates and may be installed in classrooms already in use by means of parts which are often used for installing lowered ceilings etc., e.g. hanging staves or wires.

Below, the various aspects will be further elucidated using an exemplary embodiment of the invention.

### Exemplary embodiment of the invention

- Figure 1: schematically shows a first, simple exemplary embodiment of the invention, without HR plate;
- Figure 2: schematically shows a second, more extended exemplary embodiment of the invention, including an HR plate and an isolation plate.

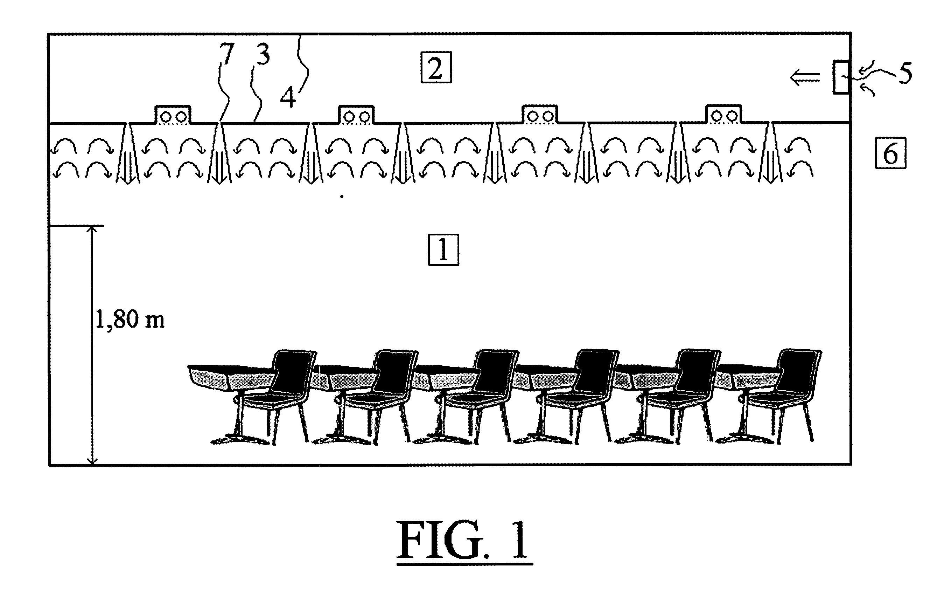

Figure 1 shows a classroom 1 provided with a ventilation system using the room 2 between a lowered ceiling 3 and a ceiling 4. A ventilator 5 provides forced air inflow from the outside air 6 into the room 2 above the lowered ceiling. The fresh outside air sucked inward is mainly distributed to the classroom over the whole surface of the lowered ceiling 3, via air outlet openings 7 which are made evenly spaced in the lowered ceiling 3, as a result of which the whole surface of the lowered ceiling 3 will be used to supply fresh air to the classroom 1. The arrows in the figure indicate that the air blown in via the openings 7 will be mixed up by induction with the air already present in the classroom 1, causing that the possible temperature difference between blown in air and the air already present in the classroom 1 will be equalized before the air enters the living zone (below the height of about 1.80 m). Besides, the air let in from the outside will additionally be warmed-up with heat originating from the classroom by the lowered ceiling, and from other construction parts like e.g. the roof, causing that the air given off by the outlet openings will be less cold than the air let in from the outside. In summer the ventilation system may be used to cool down the construction above the lowered ceiling during the night. By doing so it is possible to blow in fresh air by day at a lower temperature than the outside temperature.

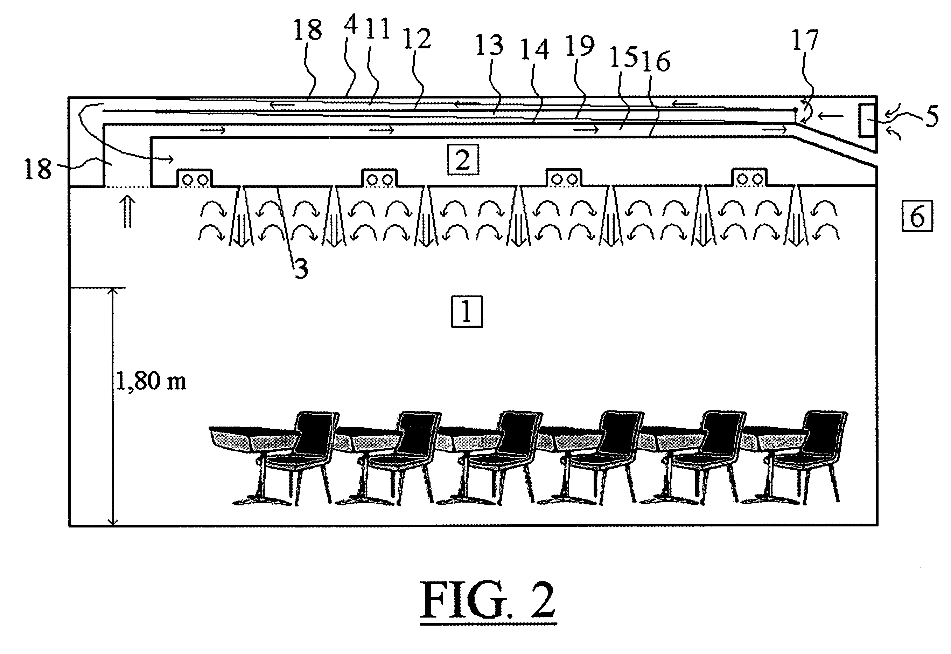

Besides, heat may be recovered from the exhaust air, which option will be treated in the discussion of figure 2.

Using outlet openings of 2.5 cm diameter, a pitch of about 30 cm and an inflow speed of 2 m/s favourable results have already been achieved.

The main components shown in figures 1 and 2 have more or less the shape of plates and may be installed by means of constructions which are commonly used for lowered ceilings in new or existing classrooms, e.g. hanging staves or wires.

Figure 2 shows how inside the room between the lowered ceiling 3 and the roof or the upper storey floor 4 an additional number of flat layers may be installed, e.g. by means of, like for the lowered ceiling 3, hanging wires or staves (not shown).

Top-down there are visible a first supply channel 11, a plate 12, a second supply channel 13, a plate 14, an exhaust channel 15 and a plate 16. Via the plates 14 and 16 heat may be exchanged and those may thus be indicated as HR plates. Preferably, plate 12 has heat isolating properties. A valve or slide 17 can open and close the entries of the first and second supply channel. Exhaust channel 15 is connected with the classroom 1 via one or more connection channels 18. Those connection channels 18 are narrower than the plates 12, 14 and 16 (which is not visible well in the figure).

At low outside temperature the energy consumption for heating may be reduced by warming-up the supply air by the exhaust air, viz. by - different from figure 2 - setting the valve 17 so that the supply air is sent to the room 2 via channel 13. In that case heat exchange will occur via the plate 14 between the supply channel 13 and the exhaust channel 15. Because this plate 14 extends over the whole surface of the classroom, the heat exchanging surface is very large.

By sending the supply air via the upper supply channel - by setting the valve 17 in the position drawn in figure 2 - it will be achieved that the supply air is blown directly under the floor of the above storey or the roof 4. A relatively high air speed will increase the heat exchange with the concrete mass. By doing so it is possible to cool this concrete floor at night. By day this cold may be used to cool the supply air. Anyway, the valve 17 also may be put into various intermediate positions, thus enabling that - the openings of both air supply channels 11 and 13 are freely accessible then - the outside air can be supplied to the room 1 to be ventilated via both air supply channels, the lowered ceiling 3 and the air outlet openings 7. In that way the extent of heat recovery can be adjusted. The valve 17 may set manually and/or by control means, e.g. an electronic processor and a servomotor (both not shown).

The large surface is advantageous too for the standing time and the pressure drop of any filter 18 in channel 11 and any filter 19 in channel 13. Because of this the energy consumption will remain low and it will be possible to achieve long filter standing times. This offers the possibility to perform filter replacement during "major repairs". As can be seen, the filters 18 and 19 can extend - placed askew - over almost the whole surface of the relevant plates 12 and 14 respectively.

## Claims

1. Method for ventilating especially classrooms (1) and similar rooms, comprising:
- providing a lowered ceiling (3);
- providing forced air inlet (5) from the outside air (6) into the room (2) above the lowered ceiling;
- providing air outlet openings (7), mainly evenly spaced over the whole surface of the lowered ceiling.

2. Ventilation system for ventilating rooms like classrooms (1) and the like, comprising a lowered ceiling (3) mainly extending parallel to the ceiling (4) of that room (1), and means (5) for forced air inlet from the outside air (6) into the room (2) above the lowered ceiling, and air outlet openings (7) mainly evenly spaced over the whole surface of the lowered ceiling.

3. Ventilation system according to claim 2, wherein the section of the outlet openings is between 2 and 30 cm².

4. Ventilation system according to claim 2 or 3, wherein the pitch of the outlet openings is between 1 and 50 cm.

5. Ventilation system according to one of the claims 2 - 4, wherein the means for forced air inlet from the outside air into the room above the lowered ceiling are formed by an electrical ventilator (5).

6. Ventilation system according to claim 2, comprising a first air supply channel (11), formed by the room between, at one side, the ceiling (4) and, at the other side, an isolation plate (12) extending mainly parallel to the ceiling, which first air supply channel (11) can form a connection between said means (5) for forced air inlet and the air outlet openings (7) in the lowered ceiling.

7. Ventilation system according to claim 6, comprising a second air supply channel (13), formed by the room between, at one side, the isolation plate (12) and, at the other side, an HR plate (14) extending mainly parallel to the ceiling, between that second air supply channel (13) and an air exhaust channel (16) also extending mainly parallel to the ceiling, which forms, via connection means (18) connected to the room (1) to be ventilated, a connection between the room to be ventilated and the outside air, which second air supply channel (11) can also form a connection between said means (5) for forced air inlet and the air outlet openings (7) in the lowered ceiling.

8. Ventilation system according to claim 7, comprising means (17) for supplying at choice, either manually or by control means, the outside air via the first air supply channel (11) and/or the second air supply channel (13).

9. Ventilation system according to claim 6 or 7, provided with a filter (18,19) in the first and/or the second air supply channel (11,13).

10. Ventilation system according to claim 9, wherein the relevant filter (18,19) extends over a substantial part of the length of the relevant air supply channel (11,13) and either is, at the entry side of that air supply channel, attached to the upside of the air supply channel and, at the exit side of the air supply channel, attached to the underside of the air supply channel, or is, at the entry side of that air supply channel, attached to the underside of the air supply channel and, at the exit side of the air supply channel, attached to the upside of the air supply channel.
